Europäisches Patentamt

European Patent Office

Office européen des brevets

(11) Publication number: **0 483 767 A1**

# EUROPEAN PATENT APPLICATION

(21) Application number: **91118442.2**

(22) Date of filing: **29.10.91**

(51) Int. Cl.5: **F21M 3/20, B60Q 1/076**

(30) Priority: **31.10.90 IT 6786290**

(43) Date of publication of application:
**06.05.92 Bulletin 92/19**

(84) Designated Contracting States:
**DE ES FR GB**

(71) Applicant: **CARELLO S.p.A.**
**Corso Unione Sovietica, 600**
**I-10135 Torino(IT)**

(72) Inventor: **Ressia, Alessio**
**Via Triveri 43**
**I-10073 Cirie(IT)**

(74) Representative: **Jorio, Paolo et al**
**Studio Torta, Via Viotti, 9**
**I-10121 Torino(IT)**

(54) **Dipping headlamp for vehicles.**

(57) A dipping headlamp (1) provided with an enclosure (2) and a reflector (4) which can be orientated through the thrust of an adjustment device (12) incorporating a motor (9) mounted within the enclosure (2) through an opening (7) in the enclosure (2) itself; the motor (9) being connected through a nut and screw to a control rod (14) which is attached to the reflector (4) and extends through the opening (7) in the enclosure (2) in order to interact with an adjustable axial reference member (21) supported by a cover (11) attaching the motor (9) to the enclosure (2).

This invention relates to a dipping headlamp for vehicles and in particular to a headlamp of the type having an outer enclosure generally in the shape of a dish; an orientatable reflector placed within the enclosure so that it can rotate with respect to the said enclosure about a substantially horizontal axis, and means of adjustment to adjust the position of the reflector about the said axis, the means of adjustment comprising a control rod attached to the reflector and substantially perpendicular to the said axis, and a motor to displace the said rod axially.

In known headlamps of the type described above the motor is normally placed outside the enclosure and is generally an electric motor having a hollow shaft through which the control rod passes and which is connected to the said rod by means of a screw and nut coupling.

The "exterior" location of the said motor obviously causes certain sealing and durability problems which can only be overcome by placing the said motor within the enclosure. However such an "interior" position of the motor results in certain assembly disadvantages such as, for example, the substantial need to attach the control rod first to the motor and then to the reflector.

The object of this invention is to provide a headlamp of the type described above wherein the motor can be protected from external agencies and at the same time assembly problems like the one described above are avoided.

According to this invention a dipping headlamp for motor vehicles is provided comprising an external enclosure, an orientatable reflector located within the enclosure to rotate with respect to the said enclosure around a substantially horizontal axis, and means of adjustment to adjust the position of the reflector about the said axis, the means of adjustment comprising a control rod connected to the reflector and substantially perpendicular to the said axis and a motor for axially displacing the said rod, characterised in that the enclosure has an internal seat housing the motor and communicating with the exterior through a mounting opening in the motor within the said seat, the control rod passing through the motor and extending outside the enclosure through the said opening, and releasable locking means being provided in order to immobilise the motor axially within the seat.

Preferably the said means of adjustment also include adjustable reference means borne by the said locking means to interact axially with one outer end of the said control rod.

In accordance with a preferred embodiment of the headlamp defined above, the said locking means include a cover closing of the said seat, the cover preferably incorporating a tubular member which is coaxial with the said rod and is engaged at a first end by an external portion of the said rod, and a second end of the said tubular member bearing the said reference means.

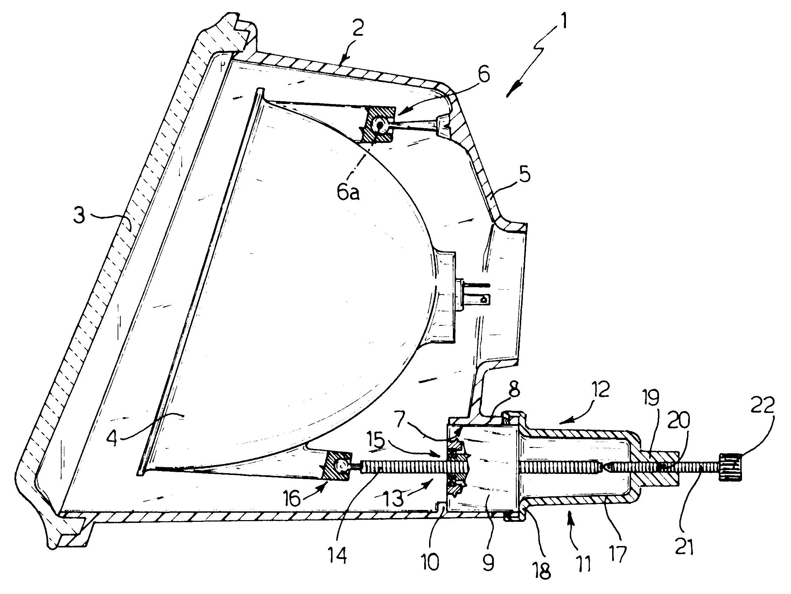

The invention will now be described with reference to the appended figure which illustrates a preferred non-restrictive embodiment thereof diagrammatically and in cross-section.

In the appended figure, 1 indicates a dipping headlamp comprising an outer enclosure 2 in the shape of a cup, which is closed anteriorly by a transparent member 3 and houses internally an orientatable reflector 4.

Outer enclosure 2 in turn comprises a base wall 5, which is coupled to reflector 4 by means of two spherical joints 6 (of which only one is illustrated) placed in line along an axis 6a which is substantially horizontal and perpendicular to one optical axis of said reflector 4.

Wall 5 is provided in its lower part with at least one opening 7 which is surrounded by a substantially cylindrical collar 8 which extends rearwards in a direction substantially parallel to the optical axis of reflector 4. Within enclosure 2 collar 8 defines a cylindrical seat housing a reversible electric motor 9 of the hollow shaft type, an outer enclosure of which, of substantially cylindrical shape, is locked within collar 8 by means of a stop 10 placed in a fixed position within outer enclosure 2, and a cover 11 which is arranged to shut off said collar 8 and has an elongated configuration which will be more particularly described below.

Electric motor 9 forms part of an adjustment device 12, and within device 12 part of an actuator device 13 which also comprises a rod 14 which is substantially perpendicular to axis 6a. An intermediate portion of rod 14 extends through a rotor of motor 9 and is coupled to the said rotor by means of a screw and nut coupling 15. Rod 14 also has a first end attached to reflector 4 by means of a joint 16 which prevents rotation of rod 14 around its own axis, and a second end which projects posteriorly outside enclosure 2 and is housed within cover 11.

With this object, cover 11 comprises a tubular body 17 which houses the said second end of rod 14, which is coaxial and is provided at an end thereof facing enclosure 2 with a flange 18 whose external perimeter is snap connected in a known way to the outer extremity of collar 8. At its end opposite that bearing flange 18 tubular body 17 is closed off by a cylindrical member 19 through which passes a threaded hole 20 coaxial with rod 14 and engaged by a screw 21 which is mounted in an adjustable position through hole 20 and forms an adjustable end stop for said rod 14.

Screw 21 is provided at one end with a control knob 22 while screw 21 itself can be displaced axially and brought into contact with the posterior extremity of rod 14 controlling reflector 4 in order to memorise an axial position of said rod 14 corresponding to an angular reference position of reflector 4 about axis 6a.

In use rod 14 is first mounted on reflector 4 which is then mounted within enclosure 2 bearing said rod 14 to engage opening 7 and pass through to the exterior through collar 8. In this way it is possible to screw electric motor 9 onto shaft 14 from the exterior by rotating it about its own axis and immobilise said motor 9 axially against stop 10 by the snap connection of cover 11 to collar 8.

At this point all that is necessary is to activate electric motor 9 so as to move reflector 4 into its reference position and set screw 21 on rod 14 to memorise the said angular position of reflector 4.

From the description it will be clear that the structure of headlamp 1 described both protects motor 9 from external agents, as motor 9 is placed within a liquid-tight enclosure, and connects reflector 4 in a simple and economical manner first to control rod 14 and then to enclosure 2 through motor 9 and corresponding axial locking cover 11.

## Claims

1. A dipping headlamp (1) for vehicles including an external enclosure (2), an orientatable reflector (4) placed within the enclosure (2) so that it can rotate with respect to the said enclosure (2) about a substantially horizontal axis (6a), and means of adjustment (12) for adjusting the position of the reflector (4) about the said axis (6a), the means of adjustment (12) comprising a control rod (14) attached to the reflector (4) and substantially perpendicular to the said axis (6a), and a motor (9) for axially displacing the said rod (14), characterised in that the enclosure (2) has an internal seat housing the motor (9) and communicating with the exterior through an opening (7) for mounting the motor (9) within the said seat, the control rod (14) passing through the motor (9) and extending outside the enclosure (9) through the said opening (7), and releasable locking means (11) being provided to lock the motor (9) axially within the seat.

2. A headlamp according to claim 1, characterised in that the said means of adjustment (12) also include adjustable reference means (21) borne by the said locking means (11) to interact axially with one external end of the said control rod (14).

3. A headlamp according to claim 1 or 2, characterised in that the said locking means include a cover (11) closing off the said seat.

4. A headlamp according to claim 3, characterised in that the cover (11) incorporates a tubular member (17) which is coaxial with the said rod (14) and engaged at a first end by an external portion of the said rod (14), a second end of the said tubular member (17) bearing the said reference means (21).

5. A headlamp according to claim 4, characterised in that the said second means of the said tubular member (17) has a through threaded hole (20) coaxial with the said rod (14), the said reference means including a screw (21) engaged in an adjustable position through the said threaded hole (20).

EP 0 483 767 A1

4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-A-3 915 302 ( KOITO SEISAKUSHO CO. ) <br> * column 1, line 54 - column 2, line 32; figure 12 * <br> --- | 1 | F21M3/20 <br> B60Q1/076 |
| A | EP-A-0 340 735 (NISSAN MOTOR CO. ) <br> * column 5, line 7 - line 23; figure 2 * <br> ----- | 1 | |

**TECHNICAL FIELDS SEARCHED (Int. Cl.5 )**

F21M
B60Q

The present search report has been drawn up for all claims

| Place of search | Date of completion of the search | Examiner |
|---|---|---|
| THE HAGUE | 28 JANUARY 1992 | MARTIN C.P.A. |

EPO FORM 1503 03.82 (P0401)